# FASCICULE DE BREVET EUROPEEN

(11) **EP 0 551 232 B1**
(45) Date de publication et mention de la délivrance du brevet: **13.09.1995**
(21) Numéro de dépôt: 93400026.6
(22) Date de dépôt: 07.01.1993
(51) Int. Cl.: A01C 11/02, A01G 9/10

(54) **Dispositif de préhension et de transfert de plants en mottes**
Vorrichtung zum Greifen und Umsetzen von Pflanzenballen
Device to pick up and transfer plants in soil blocks

(30) Priorité: 07.01.1992 FR 9200086
(43) Date de publication de la demande: 14.07.1993
(73) Titulaire: GERPLANT AUTOMATION, F-76410 Cléon (FR)
(72) Inventeur: Germaine, Michel, F-76350 Oissel (FR)
(74) Mandataire: Casalonga, Axel

(56) Documents cités:
- EP-A- 0 323 674
- FR-A- 2 614 499
- FR-A- 2 635 637
- NL-A- 7 900 943

## Description

La présente invention se rapporte à un dispositif de préhension et de transfert de plants en mottes, notamment pour le repiquage et la transplantation de plants en mini-mottes.

Par le brevet brevet français n° 2 614 499 qui divulgue les caractéristiques du préambule de la revendication 1, on connaît un dispositif de ce type comprenant, pour saisir un plant enraciné dans une motte contenue dans un alvéole, par exemple d'une plaque à alvéoles, un élément de préhension en forme de pince comportant deux lames de préhension élastiques montées en porte-à-faux sur un support de manière à se trouver à distance et en regard l'une de l'autre, et des moyens pour animer lesdites lames d'un mouvement de va-et-vient entre une position haute et une position basse et d'un mouvement de va-et-vient dans le sens d'un rapprochement et d'un écartement des extrémité libres de lames. Suivant ce document, les lames élastiques peuvent être fixées rigidement à une monture de manière à être sollicitées élastiquement dans le sens de l'écartement des extrémités libres des deux lames l'une de l'autre. Cette monture est mobile verticalement par rapport à un support, sous l'action d'un vérin monté sur ce dernier, ledit support portant par ailleurs des moyens de guidage qui coopèrent avec les lames, lors de la descente de ces dernières en position basse, pour rapprocher leurs extrémités libres l'une de l'autre par déformation élastique des lames.

Ce dispositif connu, bien que très effcace, reste encore perfectible, notamment pour la préhension de mottes dans des alvéoles à fond plat et pour la préhension de mini-mottes.

En effet, du fait que suivant ce document, le mouvement de rapprochement des extrémités libres des lames est lié au mouvement de descente des lames, ces deux mouvements commandés par un même vérin se chevauchent, c'est-à-dire que le mouvement de rapprochement des lames commence avant que le mouvement de descente des lames ne soit terminé. Par conséquent, les extrémités libres des lames décrivent dans l'alvéole, vers la fin du mouvement de descente, une trajectoire en arc de cercle, alors que pour une bonne préhension de la motte, avec le minimum de dérangement ou de destruction des racines du plant, il serait désirable que les extrémités libres des lames suivent le mieux possible les parois rectilignes et le fond plat de l'alvéole. Inversement, lors de la libération d'une motte, le mouvement d'écartement des lames et de mouvement de remontée des lames se chevauchent, de sorte que la motte repiquée se trouve soulevée avant d'être lâchée, ce qui peut gêner et retarder l'enracinement de la motte ainsi transplantée. Par ailleurs, ce dispositif de préhension connu, du fait de sa structure, ne peut pas être miniaturisé de manière que tout en étant de structure simple, il puisse être utilisé également pour la transplantation à grande cadence de plants en mini-mottes à partir de plaques à mini-alvéoles, par exemple à alvéoles ayant moins de 10 mm de côté ou de diamètre, dont l'utilisation s'impose pour des raisons de rentabilité.

La présente invention vise un dispositif de préhension et de transfert de plants en mottes qui soit mieux adapté que les dispositifs connus à la préhension de mottes dans des alvéoles à fond plat. L'invention vise également un dispositif de préhension et de transfert de plants en mottes qui puissent être miniaturé de manière à convenir également à la préhension de mini-mottes dans des alvéoles de petites tailles et très rapprochés. Enfin, l'invention vise un dispositif de préhension et de transfert de plants en mottes permettant, tout en étant de structure simple, une transplantation à grande cadence.

Le dispositif conforme à l'invention de préhension et de transfert de plants en mottes, notamment pour le repiquage et la transplantation de plants en mini-mottes comprend, pour saisir un plant en motte dans un alvéole, un élément de préhension comportant deux lames de préhension élastiques montées en porte-à-faux sur un support de manière à se trouver à distance et en regard l'une de l'autre, et des moyens pour animer lesdits lames d'un mouvement de va-et-vient entre une position haute et une position basse, et d'un mouvement de va-et-vient dans le sens d'un rapprochement et d'un écartement des extrémités libres des lames. Suivant l'invention, les deux lames de l'élément de préhension sont conformées et fixées rigidement au support de manière à se rapprocher l'une de l'autre en direction de leurs extrémités libres. Le support est animé par des premiers moyens de manoeuvre d'un mouvement vertical de va-et-vient entre une position haute et une position basse. Un élément écarteur est monté sur ledit support de façon mobile, sous l'action de seconds'moyens de manoeuvre, entre une première position dans laquelle il n'agit pas sur lesdites lames, et laisse donc leurs extrémités libres se rapprocher l'une de l'autre sous l'effet de l'élasticité des lames, et une seconde position dans laquelle il agit sur lesdites lames de manière à écarter l'une de l'autre les extrémités libres des lames à l'encontre de l'élasticité de ces dernières.

La séparation ainsi réalisée des deux mouvements de montée et de descente des lames et de rapprochement et d'écartement des lames permet de décomposer et d'adapter à volonté ces deux mouvements.

Les lames peuvent être conformées de manière que sous l'effet de leur élasticité, leur distance réciproque augmente depuis leurs extrémités libres en direction de leur emplacement de fixation au support. L'élément écarteur peut, dans ce cas, être mobile perpendiculairement aux lames, à la manière d'un coin, ou être de préférence mobile en translation longitudinale entre les lames.

Dans ce dernier cas, la première des deux positions de l'élément écarteur se trouve de préférence à distance de l'emplacement de fixation des lames sur le support. Cela augmente en conséquence la longueur de flexion des lames lors de l'écartement de ces dernières par l'élément écarteur.

Les deux lames peuvent avantageusement présenter une inflexion à l'endroit de ladite première position, de sorte que les deux lames peuvent être très proches l'une de l'autre à leur emplacement de fixation au support et s'écartent ensuite jusqu'à cette inflexion pour se rapprocher ensuite de nouveau jusqu'à leurs extrémités libres.

Pour améliorer le dégagement de la motte des lames, lors de l'écartement de ces dernières, il est avantageux d'associer aux lames un élément de retenue pour repousser la motte des lames écartées, cet élément de retenue étant avantageusement monté sur le support de façon mobile en translation parallèlement à l'élément écarteur.

Dans ce cas, l'élément de retenue peut agir par gravité sur la motte et n'être entraîné vers le haut par l'élément écarteur que vers la fin du mouvement de ce dernier vers ladite première position.

Sur un dispositif de transplantation comportant plusieurs éléments de préhension tels que définis ci-dessus, les supports de tous les éléments de préhension sont montés sur un élément de support commun mobile verticalement en va-et-vient sous l'action d'un moyen de manoeuvre commun et les éléments écarteurs de tous les éléments de préhension sont commandés par un moyen de manoeuvre commun.

De préférence un tel dispositif de transplantation à éléments de préhension multiples comprend un premier transporteur horizontal pas à pas pour des premières plaques à alvéoles contenant des plants en mottes à transplanter. Ce dispositif comprend, en outre, un second transporteur horizontal pas à pas parallèle au premier transporteur, pour des secondes plaques à alvéoles dans lesquelles les plants en mottes doivent être transplantés. Une barre horizontale s'étend perpendiculairement aux transporteurs au-dessus de ces derniers, ladite barre étant mobile verticalement en va-et-vient. De plus, une règle s'étend parallèlement à ladite barre au-dessus des transporteurs, ladite règle étant mobile verticalement en va-et-vient par rapport à la barre. Les supports des lames des éléments de préhension sont montés mobiles en translation et immobilisés en rotation sur ladite barre et les éléments écarteurs des éléments de préhension coopèrent, en vue de leur commande, avec ladite règle. Des moyens de manoeuvre sont prévus pour déplacer la barre verticalement en va-et-vient, pour déplacer la règle verticalement en va-et-vient par rapport à la barre et pour déplacer les supports des éléments de préhension en translation sur la barre entre une première position située au-dessus du premier transporteur et une seconde position située au-dessus du second transporteur.

De préférence, ce dispositif comprend, en outre, un peigne installé en position fixe au-dessus du premier transporteur, en dessous des éléments de préhension, peigne dont les dents présentent un pas égal au pas transversal des alvéoles des plaques de ce transporteur. En outre, le dispositif comprend une butée inférieure escamotable pour ladite barre et des moyens de manoeuvre pour escamoter cette butée de manière à définir pour la barre une première et une seconde positions inférieures correspondant l'une à la mise en action et l'autre à l'escamotage de ladite butée.

En se référant aux dessins schématiques annexés, on va décrire ci-après plus en détail un mode de réalisation illustratif et non limitatif d'un dispositif conforme à l'invention; sur les dessins :
la figure 1 est une vue en plan d'un dispositif de transplantation de plants en mottes équipée d'une rangée d'éléments de préhension et de transfert conformes à l'invention;
la figure 2 est une coupe suivant II-II de la figure 1;
les figures 3 et 4 représentent, à plus grande échelle, une vue latérale et une vue de face d'un élément de préhension conforme à l'invention, en position ouverte;
les figures 5 et 6 sont des vues analogues à celles des figures 3 et 4 d'un élément de préhension en position fermée;
les figures 7 et 8 représentent une vue en plan et une vue frontale d'un peigne de centrage;
les figures 9a à 9j représentent schématiquement les différentes phases d'un cycle de transplantation ou de repiquage à l'aide d'un élément de préhension conforme à l'invention.

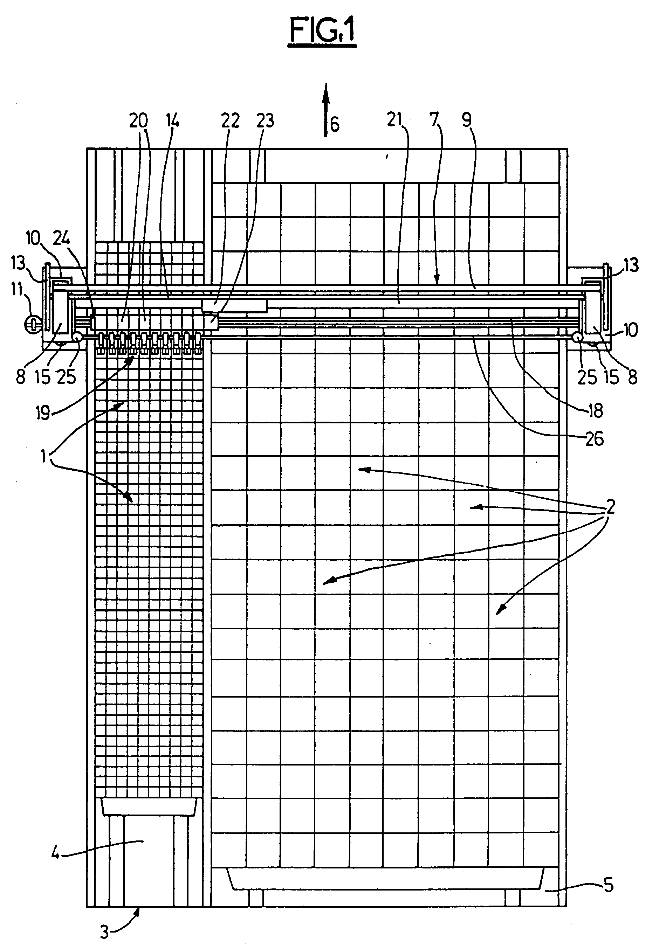

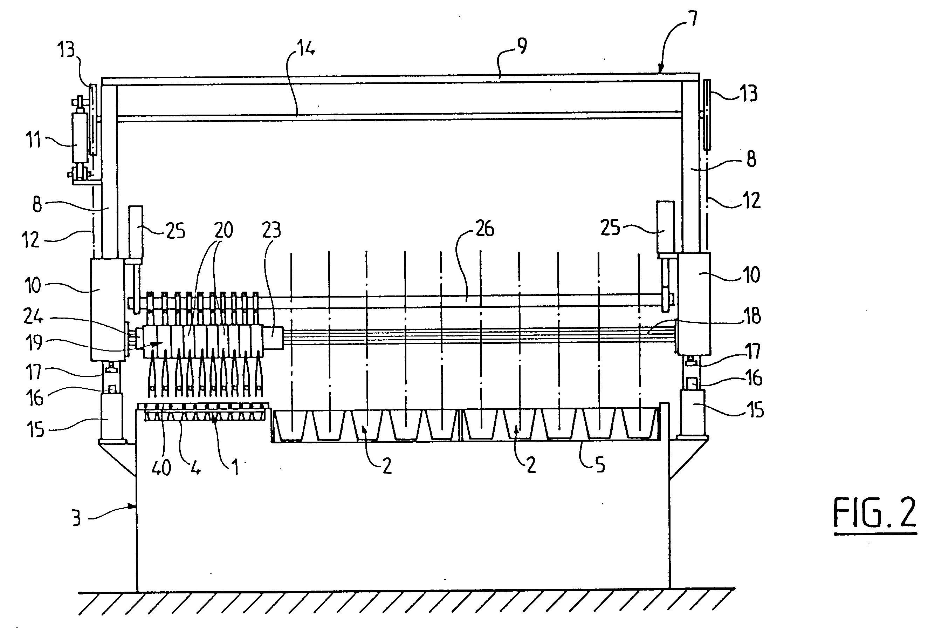

Le dispositif tel qu'illustré par les figures 1 et 2 est une machine de transplantation servant à retirer des plants en mottes de plaques à alvéoles 1 pour repiquer ces plants dans des mottes contenues dans les alvéoles plus grands de plaques à alvéoles 2. Dans l'exemple représenté, les plaques 1 sont des plaques rectangulaires comportant par exemple 160 alvéoles carrés répartis en seize rangées transversales de dix alvéoles chacune, tandis que les plaques 2 sont des plaques rectangulaires ayant par exemple 50 alvéoles répartis en dix rangées transversales de cinq alvéoles chacune.

Les plaques 1 sont des plaques de semis et de germination ayant une grande densité d'alvéoles de petite taille par exemple des alvéoles de moins de 10 mm de côté, tandis que les plaques 2 peuvent être par exemple des plaques de croissance ayant des alvéoles de par exemple 40 mm ou plus de côté dans lesquels les plants provenant des plaques 1 peuvent être élevés jusqu'à leur transplantation, par exemple dans des pots, ou jusqu'à leur vente.

La machine suivant les figures 1 et 2 comprend un bâti 3 sur lequel sont prévus un transporteur horizontal 4 pour une rangée de plaques 1, et un transporteur horizontal 5 pour deux rangées de plaques 2. Les deux transporteurs 4 et 5 font avancer les plaques 1 et 2 dans le sens de la flèche 6 sur la figure 1, à la même cadence, mais avec des pas correspondant au pas des alvéoles des plaques 1, 2 respectives.

Il est à noter que, comme représenté sur la figure 2, les deux transporteurs 4 et 5 qui reçoivent les plaques 1 et 2 se trouvent à des hauteurs différentes telles que les bords supérieurs des plaques 1 et 2 d'épaisseurs différentes soient situés sensiblement dans un même plan horizontal.

Au-dessus du bâti 3 est installé un portique 7 comprenant essentiellement deux montants 8 et une traverse supérieure 9. Deux chariots 10 sont montés coulissants et guidés verticalement sur les montants 8, leur mouvement vertical étant commandé par un ensemble comprenant un vérin pneumatique 11, deux chaînes 12 ayant l'une de leurs extrémités fixée aux deux chariots 10 et leurs autres extrémités fixées à des roues à chaîne 13 reliées entre elles par un arbre transversal 14, le vérin 11 étant articulé sur l'un des montants 8 et sur l'une des roues 13 ou une manivelle solidaire de cette roue de manière que lors de son actionnement dans un sens ou dans l'autre, il fasse tourner dans un sens ou dans l'autre la roue 13 en question pour faire ainsi monter et descendre en synchronisme les deux chariots 10.

Deux vérins pneumatiques 15 sont en outre installés sur le bâti 3, en dessous des chariots 10, de telle manière que leurs tiges de piston 16 puissent coopérer, en position d'extension des vérins, avec des butées réglables 17 prévues sur les chariots 10.

Les deux chariots 10 sont reliés entre eux par une barre transversale 18 cannelée portant un ensemble 19 d'éléments de préhension 20 qui sont mobiles en translation mais immobilisés angulairement sur la barre 18.

Comme le montre la figure 1, un élément de manoeuvre 21 qui peut être par exemple un vérin pneumatique sans tige, du type à fente ou à entrainement magnétique est en outre installé transversalement entre les deux chariots 10, son organe de sortie 22 mobile sur toute la longueur de l'élément 21 étant accouplé à un manchon cannelé 23 monté sur la barre cannelée 18, d'un côté de l'ensemble 19 des éléments de préhension 20. Sur le côté opposé de l'ensemble 19, un manchon de butée 24 est fixé sur la barre 18.

Sur chacun des deux chariots 10 est en outre monté un vérin 25 vertical, les tiges des pistons des deux vérins 25 portant une règle transversale 26 qui coopère avec les éléments de préhension 20 d'une manière qui sera décrite plus en détail par la suite.

Enfin, on reconnaît sur la figure 2 qu'un peigne 40 dont la fonction apparaîtra également par la suite est installé en position fixe à faible distance au-dessus de la face supérieure des plaques à alvéoles 1se trouvant sur le transporteur 4.

Il y a lieu de noter que sur les figures 1 et 2, les éléments de préhension 20 sont représenté dans la position qu'ils occupent au-dessus des plaques à alvéoles 1, en vue du prélèvement d'une rangée de mottes dans l'une desdites plaques. Pour le repiquage de ces mottes dans les plaques à alvéoles 2, les éléments de préhension 20 sont amenés, par coulissement sur la barre cannelée 18 sous l'action de l'élément de manoeuvre 21, au-dessus des plaques à alvéoles 2 dans les positions indiquées en trait mixte sur la figure 2.

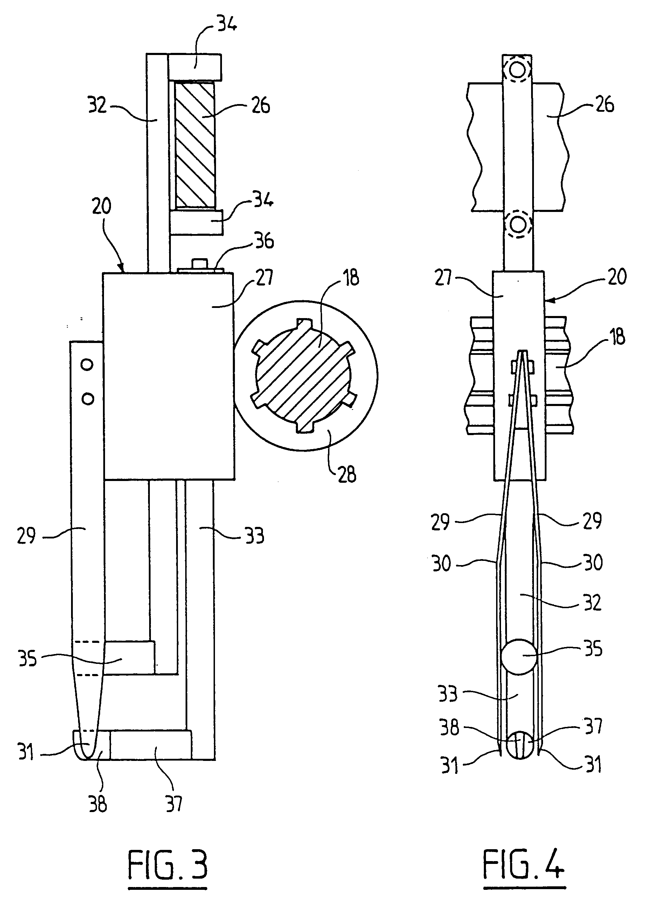

En se référant aux figures 3 à 6, on va décrire ci-après plus en détail l'un des éléments de préhension 20.

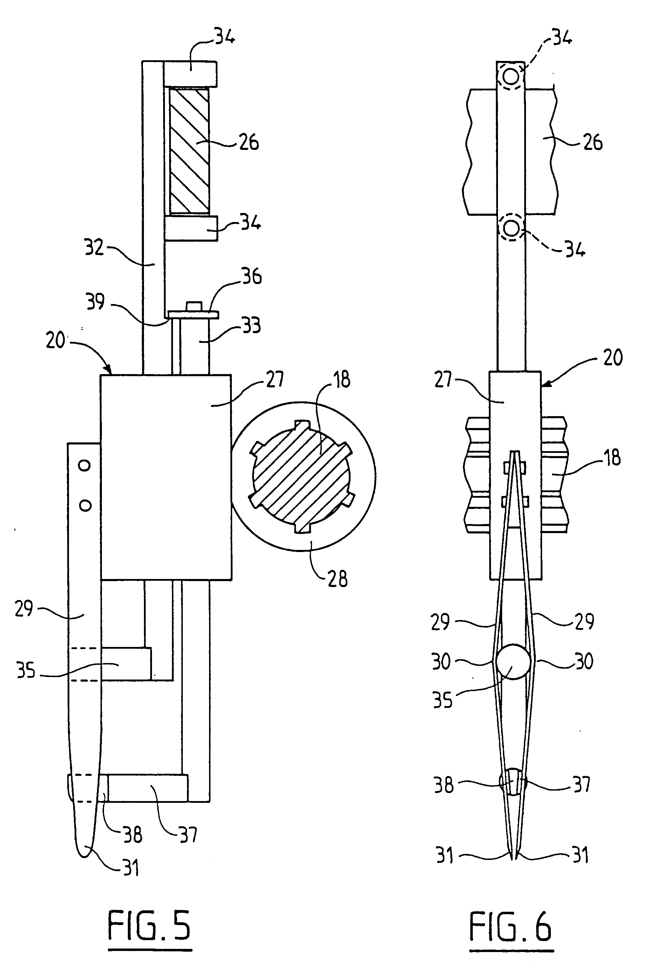

Chaque élément de préhension 20 comprend une platine 27 parallélépipédique portant sur l'une de ses grandes tranches une bague 28 cannelée intérieurement montée coulissante sur la barre cannelée 18. Sur sa grande tranche opposée, la platine 27 porte deux lames élastiques 29 fixées en porte-à-faux vers le bas à la platine 27. Selon la figure 6, chaque lame 29 présente une inflexion 30 sensiblement à mi-longueur et les deux lames 29 sont disposées symétriquement l'une par rapport à l'autre de telle manière que sous l'effet de leur élasticité, les deux lames 29 fixées à proximité l'une de l'autre à la platine 27 soient espacées l'une de l'autre à l'endroit de leurs inflexions 30 et soient par contre en contact l'une avec l'autre à l'endroit de leurs extrémités libres 31 qui, comme le montrent les figures 3 et 5, sont effilées.

Deux tiges 32 et 33 verticales sont montées coulissantes dans la platine 27. La tige 32 porte à son extrémité supérieure deux doigts horizontaux 34 espacés verticalement d'une distance légèrement supérieure à la hauteur de la règle 26, laquelle est engagée entre les deux doigts 34. A son extrémité inférieure dépassant la platine 27 vers le bas, la tige 32 porte un doigt horizontal 35 qui est engagé entre les deux lames 29 et présente un diamètre sensiblement égal à la distance séparant les deux lames 29 l'une de l'autre à l'endroit de leurs inflexions 30.

L'autre tige 33 porte à son extrémité supérieure dépassant la platine 27 vers le haut une rondelle 36 fixée par exemple à l'aide d'une vis et débordant sur la tige 33. A son extrémité inférieure, la tige 33 porte un doigt horizontal 37 dont l'extrémité libre 38 engagée entre les deux lames 29 en dessous du doigt 35 de la tige 32 est effilée.

Selon les figures 3 et 4, la pince formée par les deux lames 29 est ouverte par le fait que la tige 32 est abaissée par la règle 26, de sorte que le doigt 35 se trouve dans un position verticale intermédiaire entre les inflexions 30 des lames 29 et les extrémités libres 31 de ces lames et écarte ainsi les extrémités libres 31 des lames 29 l'une de l'autre à l'encontre des l'élasticité des lames.

Au contraire, dans la position suivant les figures 5 et 6, la pince formée par les deux lames 29 est fermée par le fait que la tige 32 est soulevée par la montée de la règle 26, de sorte que le doigt 35 se trouve à l'endroit des inflexions 30 de lames 29 et n'exerce donc plus d'effet d'écartement sur les lames dont les extrémités libres 31 sont alors rapprochées l'une de l'autre par l'effet d'élasticité des lames 29.

Il est à noter que dans la position ouverte de la pince suivant les figures 3 et 4, la tige 33 occupe par gravité une position basse définie par la rondelle 35 venant en butée contre la tranche supérieure de la platine 27, position dans laquelle le doigt 37 se trouve pratiquement aux extrémités libres 31 de lames 29. Par contre, dans la position fermée de la pince suivant les figures 5 et 6, la tige 33 est soulevée par rapport à la platine 27 par la tige 32 qui comporte un épaulement 39 coopérant avec la rondelle 35 vers la fin de son mouvement de montée, de telle manière que le doigt 37 se trouve à distance au-dessus des extrémités libres 31 des lames 29.

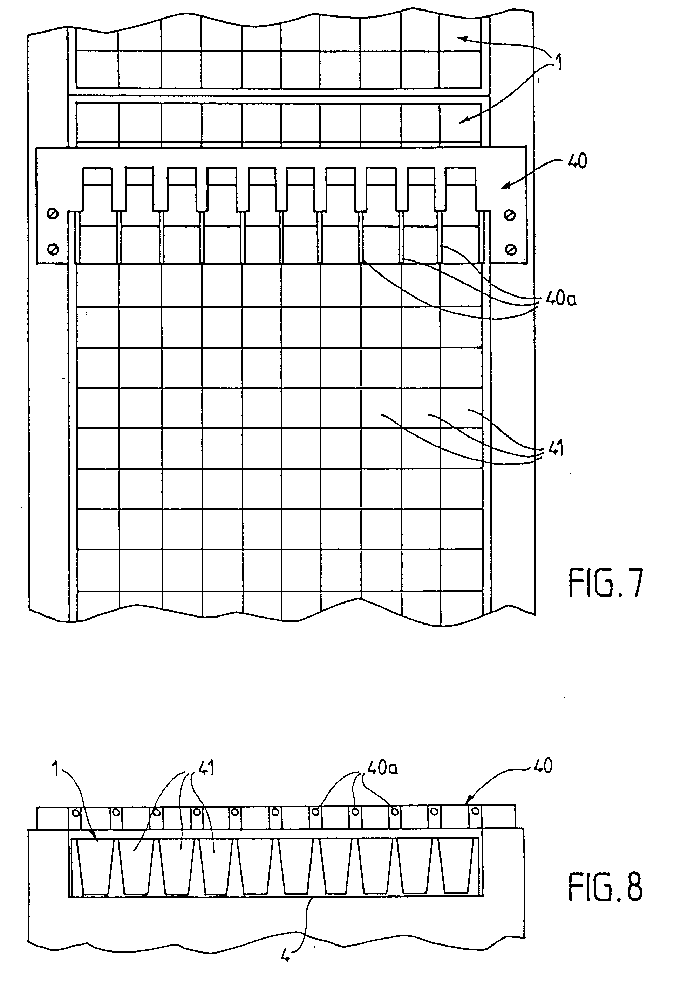

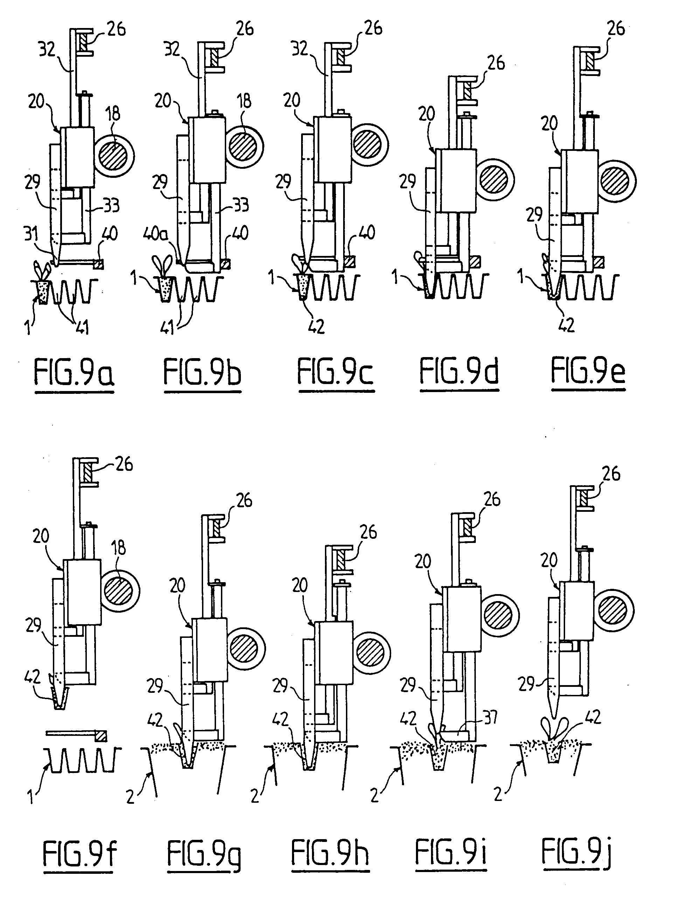

Selon les figures 7 et 8, le peigne 40 est installé transversalement au-dessus du transporteur 4 pour les plaques à alvéoles 1, de telle manière que les dents 40a du peigne dont le pas est égal au pas transversal des alvéoles 41 des plaques 1 se trouvent à distance au-dessus du bord supérieur des plaques 1.

Il est à noter que, comme cela est visible sur la figure 7, les dents 40a du peigne 40 sont suffisamment longues pour pouvoir recevoir entre elles les doigts 37 des tiges 33 des éléments de préhension 20.

Les dents 40a du peigne 40 se trouvant à la verticale au-dessus des cloisons entre les alvéoles 41 d'une même rangée, ces dents assurent un centrage, par rapport aux alvéoles 41, des lames 29 des différents éléments de préhension 20 lorsque, comme décrit plus en détail par la suite, les éléments de préhension 20 sont abaissés, les lames 29 de chaque élément 20 étant rapprochées l'une de l'autre dans la position selon la figure 6, jusqu'à ce que les pointes 31 des lames 29 se trouvent en dessous des dents 40a, mais au-dessus de la face supérieure de la plaque à alvéoles 1, et sont ensuite écartées à la position selon la figure 4. Par conséquent, après un tel centrage préalable des éléments de préhension 20 par les dents 40a du peigne 40, les lames 29 peuvent être enfoncées dans les alvéoles 41 sans risque d'accrochage aux parois des alvéoles.

En se référant plus particulièrement à la figure 9, on va décrire ci-après un cycle complet de transplantation d'une rangée de plants en mottes d'une plaque 1 à petits alvéoles dans deux plaques 2 juxtaposées à grands alvéoles.

Au début du cycle de transplantation, la plaque 1 se trouve dans la position qu'elle occupe à la fin du cycle précédent, c'est-à-dire que la rangée d'alvéoles 41 dont les mottes ont été transplantées au cours du cycle précédent se trouve en dessous des lames 29 des éléments de préhension 20, ces derniers étant rapprochés les uns des autres au-dessus de la plaque 1, comme représenté en trait plein sur la figure 2. Les deux lames 29 formant pinces de chaque élément de préhension 20 se trouvent donc au-dessus d'un alvéole 41 de cette rangée d'alvéoles, les deux lames 29 de chaque pince étant écartées, par le fait que la règle 26 est abaissée par rapport à la barre cannelée 18, par les vérins 25.

A partir de cette position de départ, on actionne dans un premier temps les vérins 25 pour soulever la règle 26, de manière à rapprocher les lames 29, c'est-à-dire fermer les pinces, et on actionne les vérins 15 pour soulever leurs tiges de piston 16. Ensuite, dans un second temps, on actionne le vérin 11 de manière à abaisser les deux chariots 10 jusqu'en butée sur les tiges de piston 16 des vérins 15, ce qui selon la figure 9a fait descendre l'ensemble des éléments de préhension 20 jusqu'à ce que les extrémités libres 31 de leurs lames 29 se trouvent légèrement en dessous des dents 40a du peigne 40, sans toutefois pénétrer dans les alvéoles 41 de la plaque 1. Les chaînes 12, par leur souplesse, compensent la réduction de course due à la butée des chariots 10 sur les tiges de piston 16 des vérins.

Selon la figure 9b, on écarte ensuite les lames 29 des éléments de préhension 20, en actionnant les vérins 25 qui abaissent ainsi la règle 26 par rapport à la barre cannelée 18. Du fait de ce mouvement d'écartement des lames 29, ces dernières se trouvent centrées sur les alvéoles 41 de la plaque 1 par les dents 40a du peigne 40.

Selon la figure 9c, on fait alors avancer d'un pas la plaque à alvéoles 1 de manière que les alvéoles de la rangée suivante, contenant chacun un plant en motte 42, viennent se situer en dessous des lames 29 des éléments de préhension 20.

Selon la figure 9d, la phase suivante du cycle consiste à enfoncer les lames 29 des éléments de préhension 20 dans les alvéoles de ladite rangée, par actionnement des vérins 15 dans le sens de la rétraction de leurs tiges de piston 16, ce qui permet au chariot 10, sous l'effet du poids de l'ensemble mobile de descendre jusqu'à une position définie par la remise sous tension des chaînes 12.

Selon la figure 9e, on ferme ensuite les pinces, c'est-à-dire on rapproche l'une de l'autre les lames 29 de chaque élément de préhension 20 en actionnant les vérins 25 dans le sens d'un soulèvement de la règle 26, de sorte que les mottes 42 contenues dans les alvéoles dans lesquels les lames 29 ont pénétré avant d'être rapprochées se trouvent saisies par lesdites lames.

Selon la figure 9f, on soulève ensuite les lames 29 rapprochées en actionnant le vérin 11 qui, par les chaînes 12, soulève les deux chariots 10 et l'ensemble des éléments montés sur ces chariots (barre cannelée 18, éléments de préhension 20, règle 26) de sorte que les mottes 42 saisies par les lames 29 se trouvent soulevées hors des alvéoles de la plaque 1.

A la suite de ce soulèvement des mottes, on actionne le vérin de translation 21 de manière que l'organe de sortie 22 de ce dernier se déplace vers la droite sur la figure 1 et entraîne les éléments de préhension 20, en les écartant les uns des l'autres, aux positions indiquées en trait mixte sur la figure 2, de manière que chaque élément de préhension 20 portant une motte 42 viennent se placer au-dessus d'un alvéole des deux plaques 2 juxtaposées. Il est à noter que les alvéoles des plaques 2 ont été préalablement remplis d'un support de culture approprié, par exemple de terreau.

Selon la figure 9g, on abaisse alors les éléments de préhension 20, en actionnant le vérin 11 qui fait descendre l'ensemble mobile, pour enfoncer les mottes 42 dans le support de culture contenu dans les alvéoles des plaques 2.

Selon la figure 9h, on ouvre ensuite les pinces, c'est-à-dire on écarte les lames 29 des éléments de préhension 20 en commandant les vérins 25 de manière qu'ils soulèvent la règle 26, de sorte que les lames 29 libèrent la motte 42.

Selon la figure 9i, on soulève les éléments de préhension 20 pour retirer des plaques 2 leurs lames 29 écartées, en actionnant le vérin 11 de manière qu'il soulève les chariots 10 et l'ensemble des éléments montés sur ces chariots.

Il est à noter que les doigts 37, pendant le retrait des lames 29 des plaques 2, reposent librement sur les mottes transplantées et retiennent ainsi ces dernières pendant l'extraction vers le haut des lames 29.

Selon la figure 9j, à la dernière phase du cycle, les lames 29 des éléments de préhension 20, rapprochées l'une de l'autre par montée de la règle 26 sous l'action des vérins 25 se retrouvent à distance au-dessus des plaques 2 et les éléments 20 peuvent être ramenés au-dessus de la plaque 1.

Pour amener les éléments de préhension 20 de la position en trait plein aux positions indiquées en trait mixte sur la figure 2, c'est-à-dire à une distance réciproque les uns des autres correspondant au pas transversal des alvéoles des plaques 2, il est par exemple possible de relier les éléments de préhension 20 les uns aux autres par des cordons souplesnon représentés de longueur appropriée, ces cordons ne gênant en aucune manière le rapprochement des éléments 20 dans la position de gauche sur la figure 2, sous la poussée directe de l'organe de sortie 22 du vérin 21.

## Revendications

1. Dispositif de préhension et de transfert de plants en mottes, notamment pour le repiquage et la transplantation de plants en minimottes, comprenant un élément de préhension comportant deux lames (29) de préhension fixées rigidement en porte-à-faux à un support (27), en regard l'une de l'autre, et des moyens pour animer lesdites lames, en vue de saisir un plant en motte dans un alvéole, d'un mouvement de descente entre une position haute et une position basse et d'un mouvement de rapprochement des extrémités libres des lames et en vue de lâcher un plant en motte, d'un mouvement d'écartement des extrémités libres des lames et d'un mouvement de montée des lames entre une position basse et une position haute, caractérisé par le fait que les deux lames (29) de l'élément de préhension (20) sont fixées au support (27) et sont conformées de manière que sous le seul effet de leur élasticité, elles se rapprochent l'une de l'autre en direction de leurs extrémités libres (31), que le support (27) est animé par des premiers moyens de manoeuvre (11, 18) d'un mouvement vertical de va-et-vient entre la position haute et la position basse, et qu'un élément écarteur (35) est monté sur ledit support (27) de façon mobile, sous l'action de seconds moyens de manoeuvre (25, 26), entre une première position dans laquelle il n'agit pas sur lesdites lames (29), et laisse leurs extrémités libres (31) se rapprocher l'une de l'autre sous l'effet de l'élasticité des lames, et une seconde position dans laquelle il agit sur lesdites lames de manière à écarter l'une de l'autre les extrémités libres (31) des lames à l'encontre de l'élasticité de ces dernières.

2. Dispositif suivant la revendication 1, caractérisé par le fait que l'élément écarteur (35) est mobile en translation longitudinale entre les lames (29).

3. Dispositif suivant la revendication 2, caractérisé par le fait que la première des deux positions de l'élément écarteur (35) se trouve à distance de l'emplacement de fixation des lames (29) sur le support (27).

4. Dispositif suivant la revendication 3, caractérisé par le fait que les deux lames (29) sont très proches l'une de l'autre à leur emplacement de fixation et présentent une inflexion (30) à l'endroit de ladite première position.

5. Dispositif suivant l'une quelconque des revendications précédentes, caractérisé par le fait qu'un élément de retenue (37) monté sur le support (27) de façon mobile parallèlement aux lames (29) est associé aux lames (29) de l'élément de préhension (20) pour repousser la motte des lames écartées.

6. Dispositif suivant la revendication 5, caractérisé par le fait que l'élément de retenue (37) est commandé par l'élément écarteur (35) de manière que l'élément de retenue agisse par gravité sur la motte et ne soit entraîné vers le haut par l'élément écarteur que vers la fin du mouvement de ce dernier vers ladite première position.

7. Dispositif suivant l'une quelconque des revendications précédentes comportant plusieurs éléments de préhension, caractérisé par le fait que les supports (27) de tous les éléments de préhension (20) sont montés sur un élément de support (18) commun mobile verticalement en va-et-vient sous l'action d'un moyen de manoeuvre (11) commun et que les éléments écarteurs (35) de tous les éléments de préhension (20) sont commandés par un moyen de manoeuvre commun (26, 25).

8. Dispositif suivant la revendication 7, caractérisé par le fait qu'il comprend un premier transporteur horizontal (4) pas à pas pour des premières plaques à alvéoles (1) contenant des plants en mottes (42) à transplanter, un second transporteur horizontal (5) pas à pas, parallèle au premier transporteur pour des secondes plaques à alvéoles (2) dans lesquelles les plants en mottes doivent être transplantés, une barre horizontale (18) s'étendant perpendiculairement au transporteur (4, 5) au-dessus de ces derniers, ladite barre étant mobile verticalement en va-et-vient, une règle (26) s'étendant parallèlement à ladite barre (18) au-dessus des transporteurs (4, 5), ladite règle étant mobile verticalement en va-et-vient par rapport à ladite barre, que les supports (27) des lames (29) des éléments de préhension (20) sont montés mobiles en translation et immobilisés en rotation sur ladite barre (18), que les éléments écarteurs (35) des éléments de préhension (20) coopèrent, en vue de leur commande, avec ladite règle (26), et que des moyens de manoeuvre (11, 25, 21) sont prévus pour déplacer la barre (18) verticalement en va-et-vient, pour déplacer la règle (26) verticalement en va-et-vient par rapport à la barre (18) et pour déplacer les supports (27) des éléments de préhension (20) en translation sur ladite barre (18) entre une première position située au-dessus du premier transporteur (4) et une seconde position située au-dessus du second transporteur (5).

9. Dispositif suivant la revendication 8, caractérisé par le fait qu'il comprend, en outre, un peigne (40) installé en position fixe au-dessus du premier transporteur (4), en dessous des éléments de préhension (20), peigne dont les dents (40a) présentent un pas égal au pas transversal des alvéoles (41) des plaques (1) de ce transporteur, une butée inférieure (16, 17) escamotable pour limiter le mouvement de descente de ladite barre (18) et des moyens de manoeuvre (15) pour escamoter cette butée de manière à définir pour la barre une première et une seconde positions inférieures correspondant l'une à la mise en action et l'autre à l'escamotage de ladite butée.

## Claims

1. Device for picking up and transferring plants in soil blocks, especially for planting out and transplanting plants grown in plugs, including a gripper element including two gripper blades (29) fixed rigidly to a support (27) so that they overhang, facing one another, and means for animating the said blades, with a view to grasping a plant in a soil block from a cell, with a downwards movement between a high position and a low position and with a movement for bringing the free ends of the blades closer together and, with a view to releasing a plant in a soil block, with a movement for moving the free ends of the blades apart and with an upwards movement of the blades between a low position and a high position, characterized in that the two blades (29) of the gripper element (20) are fixed to the support (27) and are shaped such that merely under the effect of their elasticity, they move closer together in the direction of their free ends (31), that the support (27) is animated by first operating means (11, 18) in a to-and-fro vertical movement between the high position and the low position, and that a separator element (35) is mounted on the said support (27) so that it can move under the action of a second operating means (25, 26) between a first position in which it does not act on the said blades (29) and leaves their free ends (31) to move closer together under the effect of the elasticity of the blades, and a second position in which it acts on the said blades so as to move the free ends (31) of the blades away from each other against the elasticity of these blades.

2. Device according to Claim 1, characterized in that the separator element (35) can move in terms of longitudinal translation between the blades (29).

3. Device according to Claim 2, characterized in that the first of the two positions of the separator element (35) is at some distance from the location where the blades (29) are fixed to the support (27).

4. Device according to Claim 3, characterized in that the two blades (29) are very close together at the location where they are fixed and exhibit an inflection (30) at the point of the said first position.

5. Device according to any one of the preceding claims, characterized in that a retaining element (37) mounted on the support (27) so that it can move parallel to the blades (29) is associated with the blades (29) of the gripper element (20) in order to push the soil block out of the separated blades.

6. Device according to Claim 5, characterized in that the retaining element (37) is controlled by the separating element (35) so that the retaining element acts under gravity on the soil block and is driven upwards by the separating element only after the latter has finished moving into the said first position.

7. Device according to any one of the preceding claims including several gripper elements, characterized in that the supports (27) of all the gripper elements (20) are mounted on a common support element (18) which can move vertically to and fro under the action of a common operating means (11) and in that the separator elements (35) of all the gripper elements (20) are controlled by a common operating means (26, 25).

8. Device according to Claim 7, characterized in that it comprises a first horizontal stepping conveyor (4) for first trays (1) of cells containing plants in soil blocks (42) to be transplanted, a second horizontal stepper conveyor (5) parallel to the first conveyor for second trays (2) with cells into which the plants in soil blocks are to be transplanted, a horizontal bar (18) extending perpendicularly to the conveyors (4, 5) above the latter, the said bar being able to move vertically to and fro, a rule (26) extending parallel to the said bar (18) above the conveyors (4, 5) the said rule being able to move vertically to and fro with respect to the said bar, in that the supports (27) for the blades (29) of the gripper elements (20) are mounted so that they can move in terms of translation and are immobilized in terms of rotation on the said bar (18), in that the elements (35) for separating the gripper elements (20) interact, with a view to them being controlled, with the said rule (26) and in that operating means (11, 25, 21) are provided for shifting the bar (18) vertically to and fro in order to shift the rule (26) vertically to and fro with respect to the bar (18) and in order to displace the supports (27) of the gripper elements (20) in translation along the said bar (18) between a first position situated above the first conveyor (4) and a second position situated above the second conveyor (5).

9. Device according to Claim 8, characterized in that it further comprises a comb (40) installed in a fixed position above the first conveyor (4), underneath the gripper elements (20), the teeth (40a) of which comb have a spacing equal to the transverse spacing of the cells (41) of the trays (1) of this conveyor, a retractable lower stop (16, 17) for limiting the downwards movement of the said bar (18) and operating means (15) for retracting this stop so as to define, for the bar, a first lower position and a second lower position, the one corresponding to activation and the other to retraction of the said stop.

## Patentansprüche

1. Greif- und Umsetzvorrichtung für Pflanzen mit Ballen, insbesondere zum Pikieren und zum Umsetzen von Pflanzen mit kleinem Ballen, mit einem Greifelement, das zwei Greifklingen (29) aufweist, die an einem Halter (27) vorragend und einander gegenüberstehend starr befestigt sind, und mit Mitteln, die die genannten Klingen veranlassen, eine Pflanze mit Ballen in einem Topf durch eine Absenkbewegung zwischen einer oberen Stellung und einer unteren Stellung und durch eine Annäherungsbewegung der freien Enden der Klingen zu ergreifen und eine Pflanze mit Ballen durch eine Spreizbewegung der freien Enden der Klingen und durch eine Hubbewegung der Klingen zwischen einer unteren Stellung und einer oberen Stellung loszulassen, dadurch gekennzeichnet, daß die beiden Klingen (29) des Greifelementes (20) an dem Halter (27) befestigt und derart ausgebildet sind, daß sie sich unter der alleinigen Wirkung ihrer Elastizität in Richtung auf ihre freien Enden (31) zu einander annähern, daß dem Halter (27) von ersten Betätigungsmitteln (11, 18) eine vertikale Hin- und Herbewegung zwischen der oberen Stellung und der unteren Stellung erteilt wird, und daß ein Spreizmittel (35) auf dem Halter (27) derart gelagert ist, daß es unter der Einwirkung von zweiten Betätigungsmitteln (25, 26) zwischen einer ersten Stellung, in der es nicht auf die Klingen (29) einwirkt und deren freie Enden (31) sich unter der Wirkung der Elastizität der Klingen einander annähern läßt, und einer zweiten Stellung beweglich ist, in der es auf die Klingen derart einwirkt, daß sich die freien Enden (31) der Klingen entgegen der Wirkung der Elastizität dieser letzteren voneinander abspreizen.

2. Vorrichtung nach Anspruch 1, dadurch gekennzeichnet, daß das Spreizmittel (35) zwischen den Klingen (29) längsverstellbar ist.

3. Vorrichtung nach Anspruch 2, dadurch gekennzeichnet, daß sich die erste der beiden Stellungen des Spreizmittels (35) in einem Abstand von der Befestigungsstelle der Klingen (29) auf dem Halter (27) befindet.

4. Vorrichtung nach Anspruch 3, dadurch gekennzeichnet, daß die beiden Klingen (29) an ihrer Befestigungsstelle sehr nahe beieinander stehen und an dem Ort der genannten ersten Stellung eine Einbiegung (30) aufweisen.

5. Vorrichtung nach einem der vorstehenden Ansprüche, dadurch gekennzeichnet, daß ein auf dem Halter (27) parallel zu den Klingen (29) beweglich angebrachtes Abhaltemittel (37) den Klingen (29) des Greifelementes (20) zugeordnet ist, um den Ballen von den gespreizten Klingen abzustossen.

6. Vorrichtung nach Anspruch 5, dadurch gekennzeichnet, daß das Anhaltemittel (37) von dem Spreizmittel (35) so gesteuert ist, daß das Abhaltemittel mittels Schwerkraft auf den Ballen einwirkt und von dem Spreizmittel erst gegen Ende dessen Bewegung auf die genannte erste Stellung zu nach oben mitgenommen wird.

7. Vorrichtung nach einem der vorstehenden Ansprüche mit mehreren Greifelementen, dadurch gekennzeichnet, daß die Halter (27) aller Greifelemente (20) auf einem gemeinsamen, unter der Einwirkung eines gemeinsamen Betätigungsmittels (11) in vertikaler Richtung hin- und herbeweglichen Haltemittel (18) gelagert sind und daß die Spreizmittel (35) aller Greifelemente (20) durch ein gemeinsames Betätigungsmittel (26, 25) gesteuert sind.

8. Vorrichtung nach Anspruch 7, dadurch gekennzeichnet, daß sie aufweist: einen horizontalen schrittweise arbeitenden ersten Förderer (4) für erste Topfplatten (1), welche umzusetzende Pflanzen mit Ballen (42) enthalten, einen horizontalen, zu dem ersten Förderer parallelen, schrittweise arbeitenden zweiten Förderer (5) für zweite Topfplatten (2), in welche die Pflanzen mit Ballen umgesetzt werden sollen, eine horizontale Stange (18), die sich rechtwinklig zu den Förderern (4, 5) oberhalb derselben erstreckt, wobei die Stange in vertikaler Richtung hin- und herbeweglich ist, eine Schiene (26), die sich parallel zu der Stange (18) oberhalb der Förderer (4, 5) erstreckt, wobei die Schiene gegenüber der Stange in vertikaler Richtung hin- und herbeweglich ist, wobei die Träger (27) der Klingen (29) der Greifelemente (20) längsverschieblich und drehfest auf der Stange (18) gelagert sind, die Spreizmittel (35) der Greifmittel (20) zu ihrer Steuerung mit der Schiene (26) zusammenwirken und Betätigungsmittel (11, 25, 21) vorgesehen sind, um die Stange (18) in vertikaler Richtung hin- und herzubewegen, um die Schiene (26) in vertikaler Richtung bezüglich der Stange (18) hin- und herzubewegen und um die Halter (27) der Greifelemente (20) auf der Stange (18) in Längsrichtung jeweils zwischen einer ersten oberhalb des ersten Förderers (4) befindlichen Stellung und einer zweiten oberhalb des zweiten Förderers (5) befindlichen Stellung zu verschieben.

9. Vorrichtung nach Anspruch 8, dadurch gekennzeichnet, daß sie darüber hinaus aufweist: einen ortsfest oberhalb des ersten Förderers (4) und unterhalb der Greifelemente (20) angeordneten Kamm (40), wobei die Zähne (40a) des Kamms eine Schrittweite aufweisen, die gleich der transversalen Schrittweite der Töpfe (41) der Platten (1) dieses Förderers ist, ein unwirksam machbares unteres Anschlagmittel (16, 17), um die Ansenkbewegung der Stange (18) zu begrenzen, und Betätigungsmittel (15), um dieses Anschlagmittel derart unwirksam zu machen, daß für die Stange eine erste und eine zweite untere Stellung festgelegt ist, wobei die eine dem Wirksamsein und die andere dem Unwirksamsein des Anschlagmittels entspricht.
